# EUROPEAN PATENT SPECIFICATION

(11) **EP 3 121 468 B1**
(45) Date of publication and mention of the grant of the patent: **01.01.2020**
(21) Application number: 15760991.8
(22) Date of filing: 11.03.2015
(51) Int. Cl.: F16C 33/76, B60B 35/02, B60B 35/18, F16C 19/18, F16C 41/00, F16C 41/04, F16J 15/10, F16J 15/32, B60B 7/00, B60B 27/00, F16C 33/72, F16C 33/78, B60B 27/02

(54) **WHEEL BEARING DEVICE**
RADLAGERVORRICHTUNG
DISPOSITIF DE PALIER DE ROUE

(30) Priority: 12.03.2014 JP 2014048278
(43) Date of publication of application: 25.01.2017
(73) Proprietor: NTN Corporation, Osaka-shi, Osaka 550-0003 (JP)
(72) Inventor: YAMADA, Tomoya, Iwata-shi Shizuoka 438-8510 (JP)
(74) Representative: Cohausz & Florack
(86) International application number: PCT/JP2015/057203
(87) International publication number: WO 2015/137415

(56) References cited:
- EP-A1- 2 685 117
- WO-A1-2011/034134
- JP-A- 2008 281 013
- JP-A- 2012 232 708
- JP-A- 2012 232 708
- JP-U- H02 113 021
- US-A1- 2012 177 312

## Description

### Field of the invention

The present invention generally relates to a wheel bearing apparatus which can rotationally support a wheel of a vehicle such as an automobile relative to a suspension apparatus and more particularly to a wheel bearing apparatus provided with a protection cover on an outer member of the wheel bearing which can prevent leakage of grease sealed within the wheel bearing and entering of foreign matters into the wheel bearing and have a rotation speed detecting sensor for detecting a rotation speed of a wheel.

### Description of Background Art

It has been generally known a rotation speed sensor built-in type wheel bearing apparatus which can rotationally support a wheel of vehicle with respect to a suspension apparatus, control an anti-lock braking system (ABS) and detect a rotation speed of a wheel. Such a bearing apparatus generally comprises a sealing apparatus arranged between inner and outer members rotating relatively each other via rolling elements, a magnetic encoder integrated with the sealing apparatus and having magnetic poles alternately arranged along its circumference and a rotation speed sensor for detecting change of magnetic poles of the magnetic encoder.

It is general that the rotation speed sensor is mounted on a knuckle forming part of the suspension apparatus after the wheel bearing apparatus is mounted on the knuckle. However, it has been recently proposed a wheel bearing apparatus having a rotation speed detecting apparatus of built-in type which is compact and can simplify complexity of air gap adjusting operation between the rotation speed sensor and the magnetic encoder.

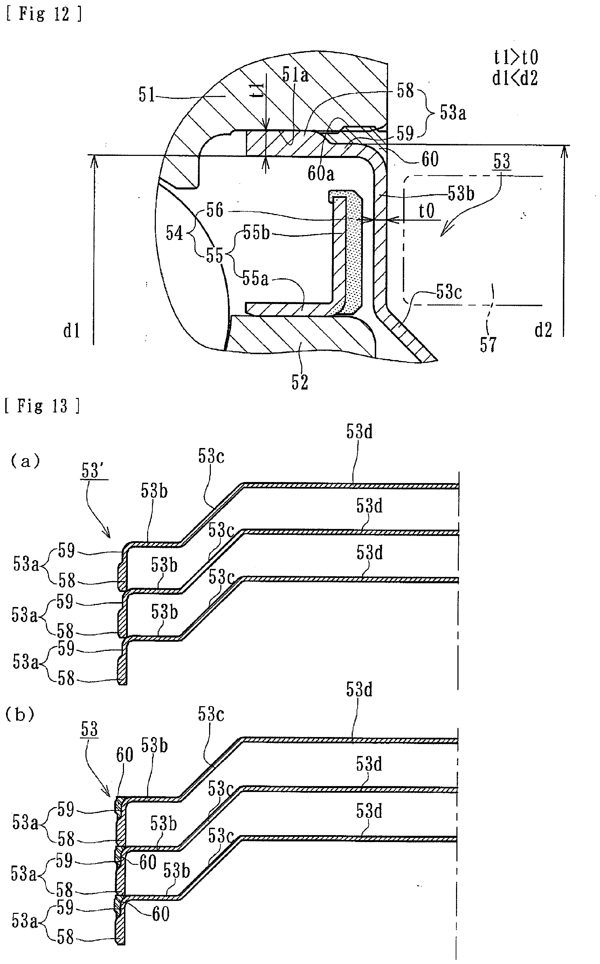

It is known a structure shown in Fig. 12 as one example of the wheel bearing apparatus of rotation speed detecting apparatus built-in type. This wheel bearing apparatus comprises seals (not shown) arranged between an outer member 51 and an inner ring 52 and a protection cover 53 for preventing leakage of grease sealed within the wheel bearing and entering of foreign matters into the wheel bearing.

A pulser ring 54 is press-fitted onto the outer circumference of the inner ring 52. The pulser ring 54 comprises a supporting member 55 press-formed of steel sheet as an annulus having an L-shaped cross-section and a magnetic encoder 56 integrally adhered to the supporting member 55. The supporting member 55 comprises a cylindrical fitting portion 55a press-fitted onto the outer circumference of the inner ring 52 and an upright portion 55b extending radially outward from the fitting portion 55a. The magnetic encoder 56 is integrally adhered to the upright portion 55b via vulcanizing adhesion.

The protection cover 53 is press-fitted into the inner circumference of the outer member 51 to close an opening of the outer member 51. The protection cover 53 is press-formed of austenitic stainless steel sheet as having a substantially flanged disc-shaped configuration and comprises a cylindrical fitting portion 53a adapted to be press-fitted into the inner circumference of the outer member 51, a disc-shaped shield portion 53b radially inwardly extending from the fitting portion 53a and adapted to be opposed to the magnetic encoder 56 via a small axial gap, and a bottom portion 53d (Fig. 13) extending from the shield portion 53b via a bent portion 53c.

The detection portion of the rotation speed sensor 57 is arranged oppositely to the protection cover 53 with being closed or contacted to the shield portion 53b. The detection portion and the magnetic encoder 56 are opposed each other via the protection cover 53 with remaining a predetermined air gap therebetween. The fitting portion 53a of the protection cover 53 comprises a cylindrical portion 58 adapted to be metal-contact fitted into a fitting surface 51a formed on the inner circumference of the end of the outer member 51 and a radially reduced cylindrical portion 59 axially extending from the cylindrical portion 58. In addition, an elastic member 60 of synthetic rubber is integrally adhered to the radially reduced portion 59 via vulcanizing adhesion. The elastic member 60 is adhered to the radially reduced portion 59 so that it does not interfere the rotation speed sensor 57 with being projected from the side-face of the shield portion 53b of the protection cover 53. In addition, the elastic member 60 has an annular projection 60a projected radially outward from the outer circumference of the cylindrical portion 58. The annular projection 60a is press-contacted against the inner circumference of the end of the outer member 51 during fitting of the protection cover 53 to improve the sealability.

These protection covers 53 are usually stacked each other to save a storage space and stocked for waiting a next manufacturing step as shown in Fig. 13(a). In this case, in order to prevent the stacked protection covers 53 from being fitted in each other before the elastic members 60 are vulcanizing adhered to the protection covers 53, an inner diameter d1 (Fig. 12) of the cylindrical portion 58 of the fitting portion 53a is set smaller than an outer diameter d2 of the radially reduced portion 59 (d1 < d2). This also makes it possible to prevent the "fitting in" of the protection covers 53 even after vulcanizing adhesion of the elastic members 60 as shown in Fig. 13(b) and thus to further improve the workability during manufacture of the protection covers 53 (see e.g. Patent Document 1 mentioned below).

### Document of Prior Art

### Patent Document

Patent Document 1: JP 2012-202415 A. A further bearing device for a wheel of a vehicle is known from EP 2 685 117 A1.

### Disclosure of the invention

### Problems to be solved by the invention

In the wheel bearing apparatus, an elastic member 60 of synthetic resin is integrally adhered to the radially reduced portion 59 and has an annular projection 60a projecting radially outward from the outer circumference of the cylindrical portion 58 of the fitting portion 53a. Since the annular projection 60a is elastically deformed and press-contacted against the inner circumference of the outer member 51 when the protection cover 53 is fitted into the outer member 51, it is possible to improve the sealability of the fitting portion 53a. However, it is a problem of the protection cover 53 that the elastic member 60 would be pushed out toward inner-side and bulged out from the end face of the outer member 51 when the protection cover 53 is press-fitted into the outer member 51 and accordingly the sealability would be impaired. For solving this problem, there has been developed an elastic member integrally formed with a lip which is elastically contacted against the inner circumference of the end of the outer member 51. However, there is caused another problem that the newly developed elastic member would be sometimes damaged or cut by metallic portions of the protection cover when the protection covers are stacked each other during manufacturing steps of the protection covers.

It is, therefore, an object of the present invention to provide a wheel bearing apparatus which can solve problems of prior art described above and therefore improve the workability in press-fitting operation and sealability in the fitting section as well as workability in the manufacturing steps and accordingly the reliability in quality of the wheel bearing apparatus.

### Means for solving problems

For achieving the objects mentioned above, there is provided a wheel bearing apparatus according to claim 1.

According to the wheel bearing apparatus of claim 1 of the present invention, since it comprises a cup-shaped steel protection cover mounted on the inner-side end of the outer member; the protection cover comprising a cylindrical fitting portion adapted to be press-fitted into the inner circumference of the inner-side end of the outer member, a disc-shaped shield portion extending radially inward from the fitting portion and a bottom portion extending from the shield portion via a bent portion for covering the inner-side end of the inner member and is characterized in that the fitting portion of the protection cover comprises a cylindrical portion adapted to be metal-contact fitted into a cylindrical fitting surface formed on the inner circumference of the end of the outer member and a radially reduced portion axially extending from the cylindrical portion; that an elastic member of synthetic rubber is integrally adhered to the radially reduced portion via vulcanizing adhesion, the elastic member comprising an annular projection radially outwardly projecting from the outer circumference of the cylindrical portion and a contact lip radially outwardly extending with an inclination at the inner-side of the annular projection; and that when the protection cover is fitted into the outer member, the annular projection is closely contacted with the fitting surface with being elastically deformed and the contact lip is elastically contacted with the inner-side end of the outer member, it is possible to improve the workability in press-fitting operation and prevent the elastic member from being pushed-out toward the inner-side and bulged out from the end face of the outer member and thus to improve the sealability of the fitting portion of the protection cover.

It is preferable as defined in claim 2 of the present invention that a pulser ring of its magnetic characteristics being alternately changed along its circumferential direction is fitted onto the inner ring, and that the protection cover is formed of non-magnetic austenitic stainless steel sheet and a rotation speed sensor is arranged oppositely to the pulser ring with being separated through an axial air gap via the protection cover. It is possible to set the air gap small and improve the detection accuracy.

It is also preferable as defined in claim 3 of the present invention that an outer diameter of a tip end of the cylindrical portion of the protection cover is set smaller than an outer diameter of a tip end of the contact lip of the elastic member. This makes it possible to provide a wheel bearing apparatus which can prevent the contact lip of a lower stacked protection cover from being damaged or cut by the tip end of the cylindrical portion of an upper stacked protection cover when the protection covers are stacked each other during transfer between manufacturing steps and thus can improve the workability in manufacturing and transferring steps as well as reliability of quality.

It is preferable as defined in claim 4 of the present invention that a chamfered portion having an inclined flat surface is formed on a tip end of the cylindrical portion of the protection cover and an inclination angle of the chamfered portion corresponds to that of the contact lip. This makes it possible to easily press-fit the protection cover into to the outer member and improve the stability of the stacked state and thus the workability in manufacture of the protection cover.

It is preferable as defined in claim 5 of the present invention that a chamfered portion having a circular arc surface is formed on a tip end of the cylindrical portion of the protection cover. This makes it possible to easily press-fit the protection cover into to the outer member and prevent the contact lip from being damaged and cut.

It is also preferable as defined in claim 6 of the present invention that a bent edge bent radially inward is formed on a tip end of the cylindrical portion of the protection cover. This makes it possible to easily press-fit the protection cover into the outer member and prevent the contact lip from being damaged and cut.

It is preferable as defined in claim 7 of the present invention that a cylindrical guide portion is integrally formed on the elastic member radially inward of the contact lip and an outer diameter of the guide portion is set smaller than an inner diameter of the cylindrical portion of the protection cover with remaining a guiding gap therebetween. This makes it possible to improve the stability of the stacked state of the protection covers and the workability in their manufacture since the cylindrical portion of the upper protection cover is radially guided by the guide portion of the lower protection cover.

According to the wheel bearing apparatus of claim 1 of the present invention, the bent portion is formed with being bent at a right angle relative to the shield portion and the protection cover is formed as having configurations and dimensions so that metallic portions of mutually adjacent protection covers contact each other before the cylindrical portions are abutted against the elastic members when the protection covers are stacked each other. This makes it possible to prevent the metallic fitting portion from being contacted against the elastic member and the contact lip from being damaged and cut since the corner between the bent portion and shield portion of the upper protect cover abuts against the corner between the bottom portion and the bent portion of the lower protect cover.

It is also preferable as defined in claim 8 of the present invention that the protection cover comprises a smaller cylindrical portion axially extending from the bent portion via a taper-shaped stepped portion and having a diameter smaller than that of the bent portion. This makes it possible to prevent the elastic member from being contacted against the metallic cylindrical portion of the protection cover and thus from being damaged and cut and accordingly to further improve the stability and workability due to surface contact between fitted protection covers stacked each other since the corner between the bent portion and the shield portion of the upper protection cover abuts against the stepped portion of the lower protection cover before the cylindrical portion of the metallic portion contacts against the elastic member.

### Effects of the invention

According to the wheel bearing apparatus of the present invention, since it comprises an outer member integrally formed on its inner circumference with double row outer raceway surfaces; an inner member including a hub wheel and at least one inner ring, the hub wheel being integrally formed on its one end with a wheel mounting flange and having a cylindrical portion axially extending from the wheel mounting flange, the inner ring being press fitted onto the cylindrical portion of the hub wheel, the inner member being formed on its outer circumferences with double row inner raceway surfaces opposing to the double row outer raceway surfaces; double row rolling elements contained between the outer raceway surfaces and inner raceway surfaces respectively of the outer member and the inner member; and a cup-shaped steel protection cover mounted on the inner-side end of the outer member; the protection cover comprising a cylindrical fitting portion adapted to be press-fitted into the inner circumference of the inner-side end of the outer member, a disc-shaped shield portion extending radially inward from the fitting portion and a bottom portion extending from the shield portion via a bent portion for covering the inner-side end of the inner member and is characterized in that the fitting portion of the protection cover comprises a cylindrical portion adapted to be metal-contact fitted into a cylindrical fitting surface formed on the inner circumference of the end of the outer member and a radially reduced portion axially extending from the cylindrical portion; that an elastic member of synthetic rubber is integrally adhered to the radially reduced portion via vulcanizing adhesion, the elastic member comprising an annular projection radially outwardly projecting from the outer circumference of the cylindrical portion and a contact lip radially outwardly extending with an inclination at the inner-side of the annular projection; and that when the protection cover is fitted into the outer member, the annular projection is closely contacted with the fitting surface with being elastically deformed and the contact lip is elastically contacted with the inner-side end of the outer member, it is possible to improve the press-fitting ability of the protection cover into the outer member, to prevent the elastic member from being pushed out toward the inner-side of the bearing apparatus and bulged out from the end face of the outer member, and to improve the sealability of the fitting portion of the protection cover.

### Brief Description of the Drawings

[Fig.1] A longitudinal-sectional view of a first embodiment of a wheel bearing apparatus of the present invention;
[Fig. 2] A partially enlarged view showing a detection portion of Fig. 1;
[Fig. 3(a)] An explanatory view showing a stacked state of the protection covers of Fig. 2, [Fig. 3(b)] an enlarged view of Fig. 3(a), and [Fig. 3(c)] an enlarged view showing a modification of the elastic member of Fig. 3(b);
[Fig. 4(a)] An explanatory view showing a stacked state of protection covers being modification of Fig. 2, and [Fig. 4(b)] an enlarged view of Fig. 4(a);
[Fig. 5(a)] An explanatory view showing a stacked state of protection covers being other modification of Fig. 2, and [Fig. 5(b)] an enlarged view of Fig. 5(a);
[Fig. 6(a)] An explanatory view showing a stacked state of protection covers being other modification of Fig. 2, and [Fig. 6(b)] an enlarged view of Fig. 6(a);
[Fig. 7(a)] An explanatory view showing a stacked state of protection covers being other modification of Fig. 2, and [Fig. 7(b)] an enlarged view of Fig. 7(a);
[Fig.8(a)] An explanatory view showing a stacked state of protection covers being other modification of Fig. 2, and [Fig. 8(b)] an enlarged view of Fig. 8(a);
[Fig. 9(a)] An explanatory view showing a stacked state of protection covers being other modification of Fig. 2, and [Fig. 9(b)] an enlarged view of Fig. 9(a);
[Fig. 10(a)] An explanatory view showing a stacked state of protection covers being modification of Fig. 9, and [Fig.10(b)] an enlarged view of Fig. 10(a);
[Fig. 11(a)] An explanatory view showing a stacked state of protection covers being other modification of Fig. 9, and [Fig.11(b)] an enlarged view of Fig. 11(a);
[Fig. 12] An enlarged view showing a mounted portion of a protection cover of a wheel bearing apparatus of the prior art; and
[Fig. 13(a)] An explanatory view showing a stacked state of protection covers of Fig. 12 before vulcanizing adhesion, and [Fig. 13(b)] an explanatory view showing a stacked state of protection covers of Fig. 12 after vulcanizing adhesion.

### Preferable mode for carrying out the invention

A preferable mode for carrying out the present invention is a wheel bearing apparatus comprising an outer member having on its outer circumference an integrally formed body mounting flange to be mounted on a knuckle and on its inner circumference double row outer raceway surfaces; an inner member including a hub wheel and an inner ring, the hub wheel being integrally formed on its one end with a wheel mounting flange and having a cylindrical portion axially extending from the wheel mounting flange, the inner ring being press fitted onto the cylindrical portion of the hub wheel, the hub wheel and the inner ring being formed on their outer circumferences respectively with double row inner raceway surfaces opposing to the double row outer raceway surfaces; double row rolling elements contained between the inner raceway surfaces and outer raceway surfaces of the inner member and outer member; a pulser ring fitted onto the outer circumference of the inner ring and having circumferentially and equidistantly changing magnetic characteristics; a cup-shaped steel protection cover formed of non-magnetic steel sheet and mounted on the inner-side end of the outer member; the protection cover comprising a cylindrical fitting portion adapted to be press-fitted into the inner circumference of the inner-side end of the outer member, a disc-shaped shield portion extending radially inward from the fitting portion and a bottom portion extending from the shield portion via a bent portion for covering the inner-side end of the inner member; and a rotation speed sensor arranged oppositely to the pulser ring with a predetermined axial air gap via the protection cover characterized in that the fitting portion of the protection cover comprises a cylindrical portion adapted to be metal-contact fitted into a cylindrical fitting surface formed on the inner circumference of the end of the outer member and a radially reduced portion axially extending from the cylindrical portion; that an elastic member of synthetic rubber is integrally adhered to the radially reduced portion via vulcanizing adhesion, the elastic member comprising an annular projection radially outwardly projecting from the outer circumference of the cylindrical portion and a contact lip radially outwardly extending with an inclination at the inner-side of the annular projection; that when the protection cover is fitted into the outer member, the annular projection is closely contacted with the fitting surface with being elastically deformed and the contact lip is elastically contacted with the inner-side end of the outer member; and that an outer diameter of a tip end of the cylindrical portion of the protection cover is set smaller than an outer diameter of a tip end of the contact lip of the elastic member.

### Embodiments

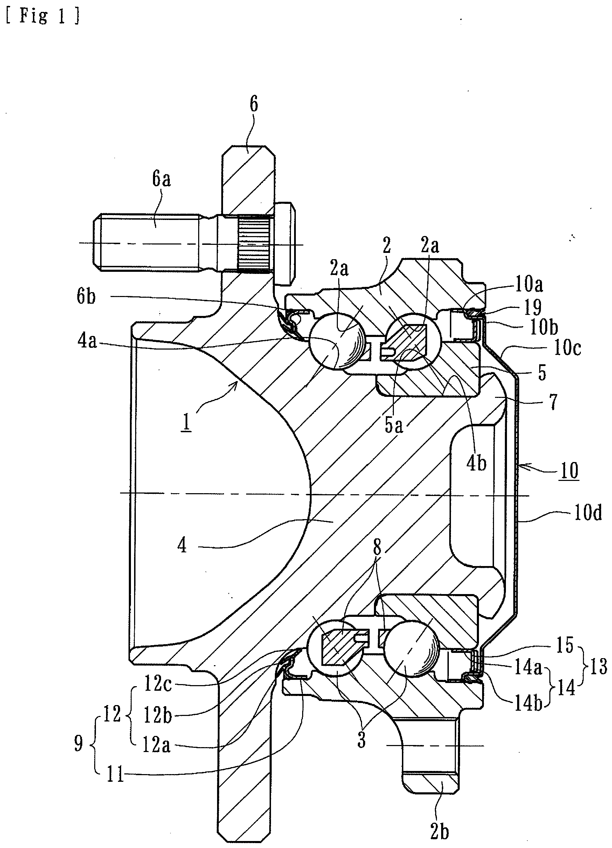

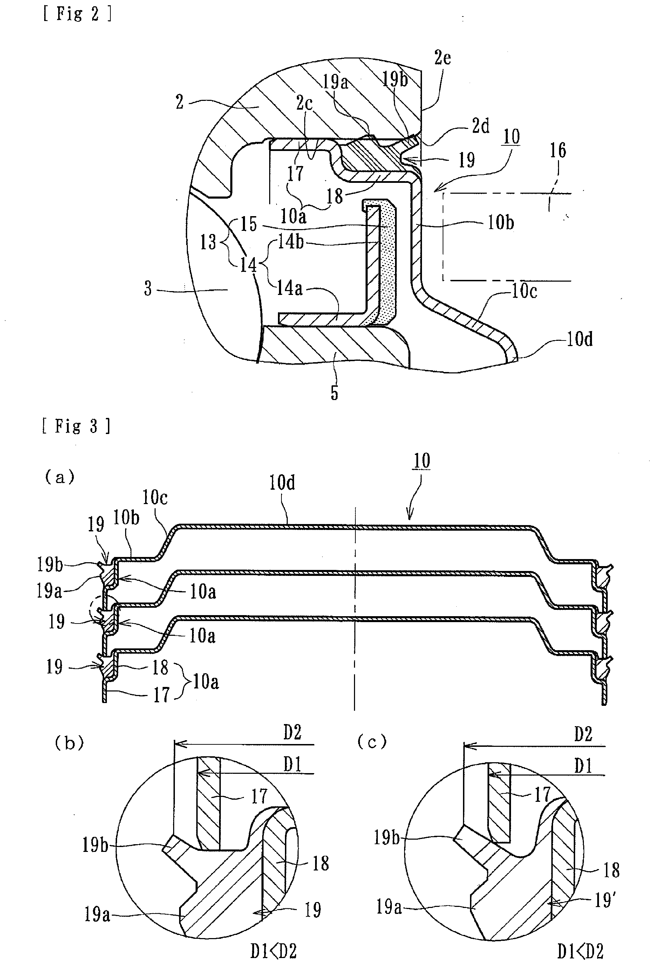

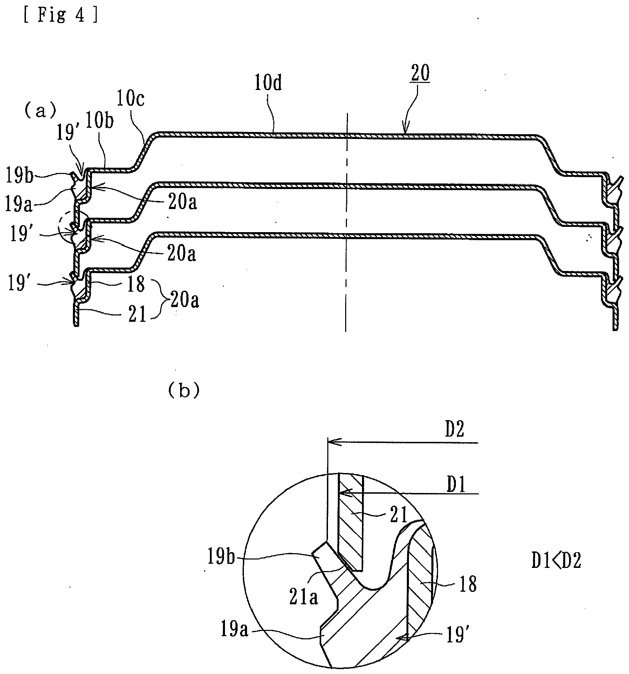

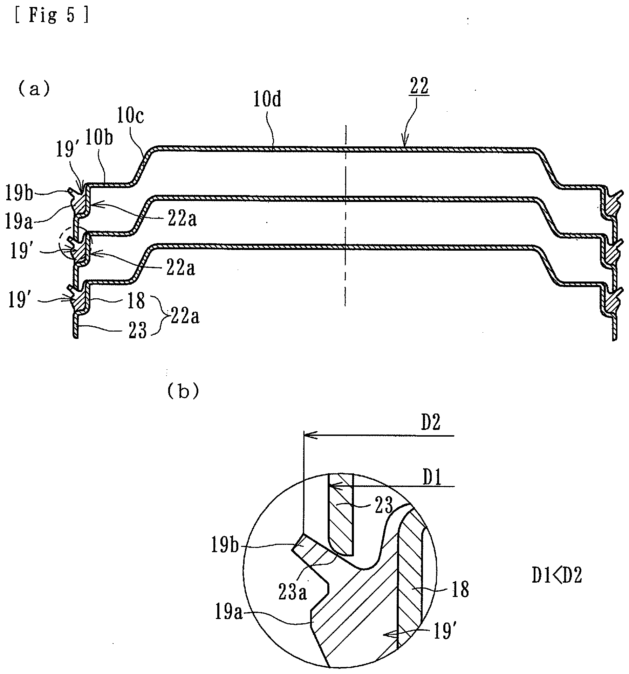

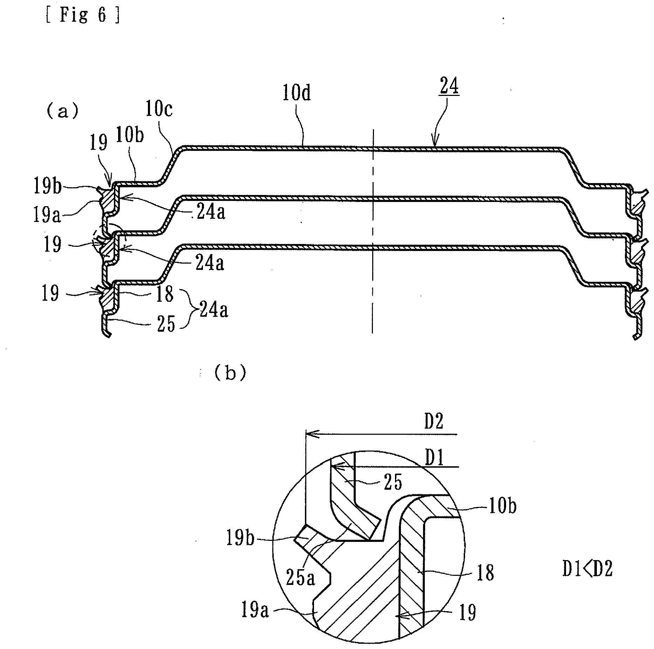

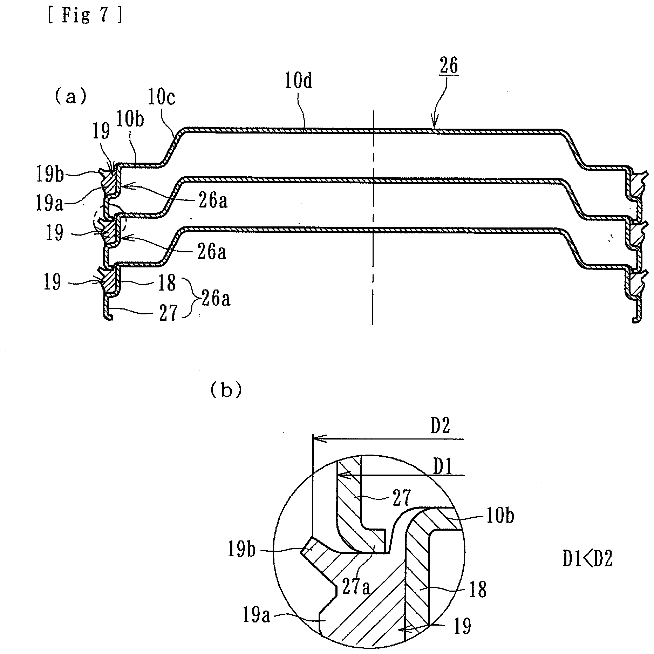

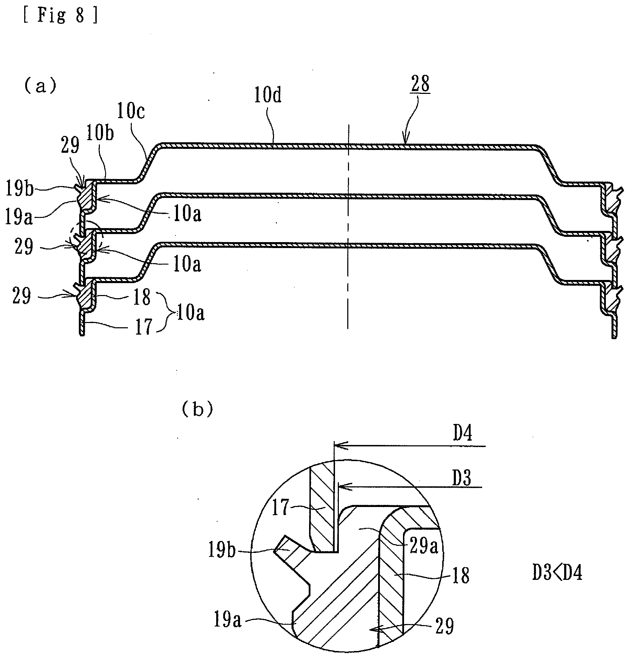

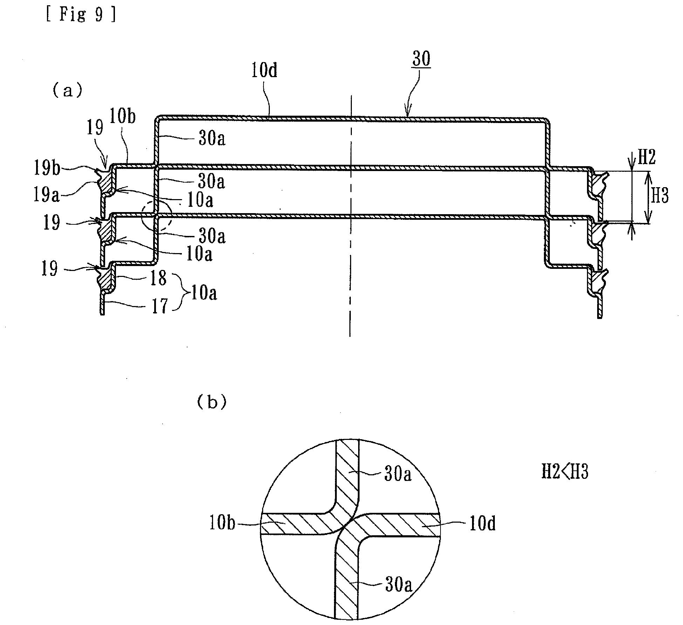

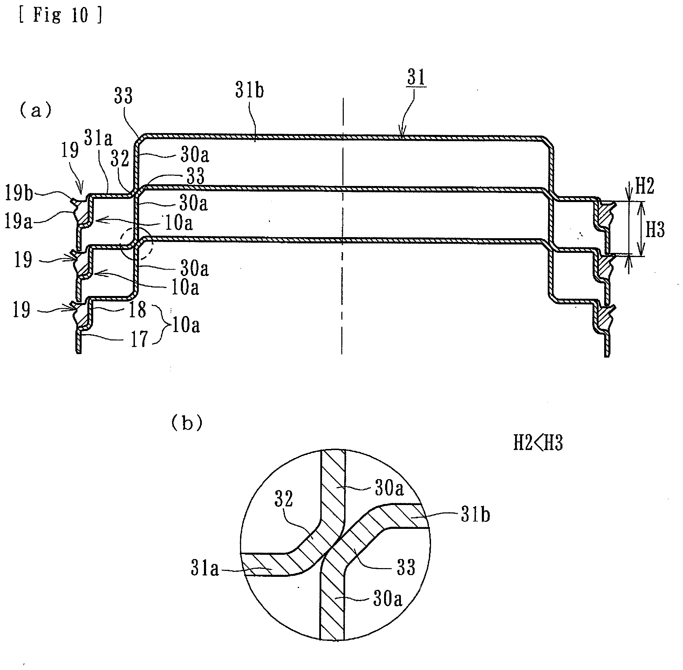

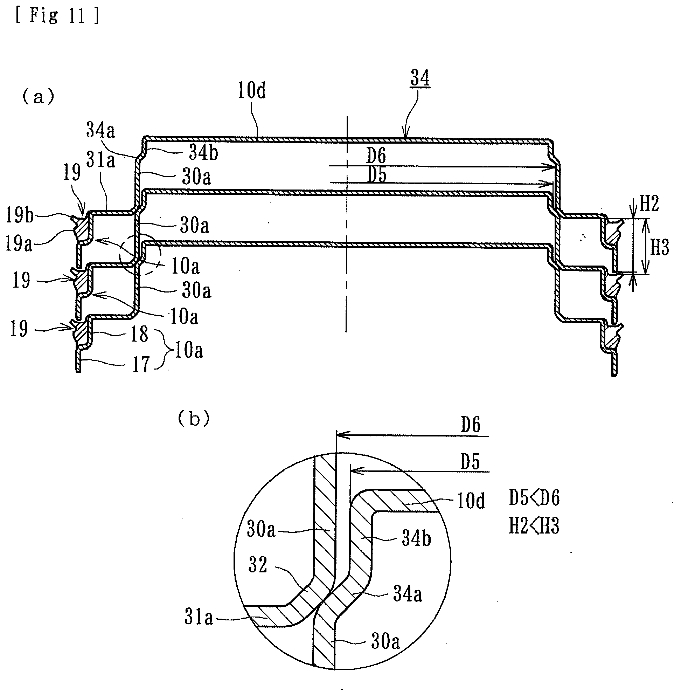

A preferred embodiment of the present invention will be described with reference to the accompanied drawings. Fig.1 is a longitudinal-sectional view of one embodiment of a wheel bearing apparatus of the present invention, Fig. 2 is a partially enlarged view showing a detection portion of Fig. 1, Fig. 3(a) is an explanatory view showing a stacked state of the protection covers of Fig. 2, Fig. 3(b) is an enlarged view of Fig. 3(a), Fig. 3(c) is an enlarged view showing a modification of the elastic member of Fig. 3(b), Fig. 4(a) is an explanatory view showing a stacked state of protection covers being modification of Fig. 2, Fig. 4(b) is an enlarged view of Fig. 4(a), Fig. 5(a) is an explanatory view showing a stacked state of protection covers being other modification of Fig. 2, Fig. 5(b) is an enlarged view of Fig. 5(a), Fig. 6(a) is an explanatory view showing a stacked state of protection covers being other modification of Fig. 2, Fig. 6(b) is an enlarged view of Fig. 6(a), Fig. 7(a) is an explanatory view showing a stacked state of protection covers being other modification of Fig. 2, Fig. 7(b) is an enlarged view of Fig. 7(a), Fig. 8(a) is an explanatory view showing a stacked state of protection covers being other modification of Fig. 2, Fig. 8(b) is an enlarged view of Fig. 8(a), Fig. 9(a) is an explanatory view showing a stacked state of protection covers being other modification of Fig. 2, Fig. 9(b) is an enlarged view of Fig. 9(a), Fig. 10(a) is an explanatory view showing a stacked state of protection covers being modification of Fig. 9, Fig. 10(b) is an enlarged view of Fig. 10(a), Fig. 11(a) is an explanatory view showing a stacked state of protection covers being other modification of Fig. 9, and Fig. 11(b) is an enlarged view of Fig. 11(a). In description of this specification, an outer-side of a bearing apparatus when it is mounted on a vehicle is referred to as "outer-side" (a left side in a drawing), and an inner-side of a bearing apparatus when it is mounted on a vehicle is referred to as "inner side" (a right side in a drawing).

The wheel bearing apparatus shown in Fig. 1 is a so-called "third generation" type for a driven wheel and comprises an inner member 1, an outer member 2, and double row rolling elements (balls) 3, 3 contained between the inner and outer members 1 and 2. The inner member 1 includes the hub wheel 4 and an inner ring 5 press-fitted onto the hub wheel 4 via a predetermined interference.

The hub wheel 4 is integrally formed, on its outer-side end, with a wheel mounting flange 6 for mounting a wheel (not shown) and is formed, on its outer circumference, with one (outer-side) inner raceway surface 4a from which axially extends a cylindrical portion 4b. Hub bolts 6a are secured on the wheel mounting flange 6 at its circumferentially equidistant positions.

The inner ring 5 is formed on its outer circumference with the other (inner-side) inner raceway surface 5a and press-fitted onto the cylindrical portion 4b of the hub wheel 4 via a predetermined interference to form a so-called back-to-back duplex bearing. In addition, the inner ring 5 is axially secured on the hub wheel 4 with being applied a predetermined bearing pre-pressure by a caulked portion 7 formed by plastically deforming the end of the cylindrical portion 4b of the hub wheel 4 radially outward.

The hub wheel 4 is made of medium-high carbon steel such as S53C including carbon of 0.40∼0.80% by weight and is hardened by high frequency induction hardening as having a surface hardness of 58∼64 HRC over the inner raceway surface 4a and a region from an inner-side base 6b of the wheel mounting flange 6 to the cylindrical portion 4b. The caulked portion 7 is not hardened to keep hardness after forging less than 25 HRC. This enables to increase mechanical strength against the rotary bending load applied to the wheel mounting flange 6 and improve the anti-fretting strength of the cylindrical portion 4b on which the inner ring 5 is press-fitted and to perform the plastic deforming of the caulked portion 7 smoothly without causing micro cracking therein.

The inner ring 5 is formed of high carbon chrome steel such as SUJ2 and dipping hardened to their cores as having hardness of 58∼64 HRC and the rolling elements 3 are formed of high carbon chrome steel such as SUJ2 and hardened as having hardness of 62∼67 HRC.

The outer member 2 is formed, on its outer circumference, with body mount flange 2b adapted to be mounted on a knuckle (not shown) and also formed, on its inner circumference, with double row outer raceway surfaces 2a, 2a. The double row outer raceway surfaces 2a, 2a oppose to the inner raceway surfaces 4a, 5a of the inner member. Similarly to the hub wheel 4, the outer member 2 is formed of medium-high carbon steel such as S53C including carbon of 0.40∼0.80% by weight and at least the outer raceway surfaces 2a, 2a are hardened by high frequency induction hardening as having a surface hardness of 58∼64 HRC. The double row rolling elements 3, 3 are rollably contained between the inner and outer raceway surfaces 4a, 5a and 2a, 2a via cages 8.

A seal 9 is mounted on the outer-side opening formed between the outer member 2 and inner member 1 and protection cover 10 is mounted on the inner-side opening in order to close and seal annular openings and to prevent leakage of lubricating grease sealed within the bearing and entering of rain water or dusts from the outside into the bearing.

The outer-side seal 9 is formed as an integrated seal comprising a core metal 11 press-fitted into the outer-side end of the outer member 2 via a predetermined interface and a sealing member 12 adhered to the core metal 11 via by vulcanizing adhesion. The core metal 11 is press-formed of austenitic stainless steel sheet (JIS SUS 304 etc.) or cold rolled steel sheet (JIS SPCC etc.) so as to have an L-shaped cross-section.

On the other hand, the sealing member 12 is formed of synthetic rubber such as NBR (acrylonitrile-butadiene rubber) and comprises a side lip 12a and a dust lip 12b inclined radially outward and slide-contacting with the inner-side base 6b having a circular-arc section of the wheel mounting flange 6 via a predetermined interference, and a grease lip 12c inclined toward the inner-side and slide-contacting with the base 6b of circular arc section via a predetermined interference.

There are examples of material of sealing member 12 other than NBR such as HNBR (hydrogenation acrylonitric-butadiene rubber), EPDM (ethylene propylene rubber), ACM (poly-acrylic rubber) superior in heat and chemical resistance, FKM (fluororubber) or silicone rubber.

Although it is shown herein the wheel bearing apparatus formed by a double row angular contact ball bearing using balls as rolling elements 3, the present invention is not limited to such a bearing and may be a double row tapered roller bearing using tapered rollers as rolling elements 3. In addition, although it is shown herein the wheel bearing apparatus of third generation type, the present invention can be applied to first and second generation type bearings (not shown) in which a pair of inner rings are press-fitted onto the cylindrical portion of the hub wheel.

In this embodiment, a pulser ring 13 is press-fitted onto the outer circumference of the inner ring 5. The pulser ring 13 comprises an annular support member 14 having a generally annular configuration and formed of a ferromagnetic steel plate such as ferritic stainless steel sheet (JIS SUS 430 etc.) or preserved cold rolled steel sheet by press working so as to have an L-shaped cross-section, and a magnetic encoder 15.

The annular support member 14 comprises a cylindrical fitting portion 14a to be press-fitted onto the outer circumference of the inner ring 5 and an upright portion 14b extending radially outward from the cylindrical fitting portion 14a. The magnetic encoder 15 is integrally adhered to the upright portion 14b by vulcanizing adhesion. The magnetic encoder 15 is formed of elastomer such as rubber into which ferritic magnetic powder is mingled so that N and S poles are alternately arranged along its circumference to form a rotary encoder for detecting the rotation speed of wheel.

Although it is shown herein a pulser ring 13 having the magnetic encoder 15 comprising rubber magnet, it is possible to use other kinds of encoders such as a pulser ring of steel sheet formed with a plurality of through apertures or irregularities or formed of sintered alloy or that to which plastic magnet plate is adhered.

A protection cover 10 is press-fitted into the inner circumference of the inner-side end of the outer member 2 to close the inner-side opening of the outer member 2. The protection cover 10 is formed of non-magnetic austenitic stainless steel sheet having anti-corrosion characteristics so as not to give adverse effect on sensing performance of a rotation speed sensor 16.

The protection cover 10 has a cup-shaped configuration and comprises a cylindrical fitting portion 10a adapted to be press-fitted into the inner circumference of the inner-side end of the outer member 2, a disc-shaped shield portion 10b extending radially inward from the fitting portion 10a and opposing to the magnetic encoder 15 via a small axial gap, and a bottom portion 10d extending from the shield portion 10b via a bent portion 10c for covering the inner-side end of the inner member 1.

As shown in the enlarged view of Fig. 2, the detection portion of the rotation speed sensor 16 is arranged so that it is adjacent to or contact to the shield portion 10b of the protection cover 10, and the detection portion of the rotation speed sensor 16 and the magnetic encoder 15 are opposed each other via the protection cover 10 with remaining a predetermined air gap (axial gap) therebetween. The rotation speed sensor 16 is formed of injection moldable synthetic resin such as PA66 in which an IC circuit incorporated with a Hall element, a magnetic resistance element (MR element), and a waveform shaping circuit for shaping the output waveform of the magnetic detecting element (not shown) are embedded and forms the ABS of an automobile for detecting the rotation speed of a wheel and controlling it.

In this embodiment, the fitting portion 10a of the protection cover 10 comprises a cylindrical portion 17 adapted to be metal-contact fitted into a cylindrical fitting surface 2c formed on the inner circumference of the end of the outer member 2 and a radially reduced portion 18 axially extending from the cylindrical portion 17. An elastic member 19 of synthetic rubber such as NBR is integrally adhered to the radially reduced portion 18 via vulcanizing adhesion.

The elastic member 19 is adhered to the protection cover 10 so that it does not project to the inner-side from the shield portion 10b of the protection cover 10 to prevent the elastic member 19 from interfering the rotation speed sensor 16. The elastic member 19 comprises an annular projection 19a radially outwardly projecting from the outer circumference of the cylindrical portion 17 and a contact lip 19b radially outwardly extending with an inclination at the inner-side of the annular projection 19a. When the protection cover 10 is fitted into the outer member 2, the annular projection 19a is closely contacted with the fitting surface 2c with being elastically deformed and the contact lip 19b is elastically contacted with a chamfered portion 2d formed on the inner-side end of the outer member 2 to form a so-called half metal structure. This makes it possible to improve the workability in press-fitting operation and prevent the elastic member 19 from being pushed-out toward the inner-side and bulged out from the end face 2e of the outer member 2 and thus to improve the sealability of the fitting portion 10a of the protection cover 10.

It is preferable that the fitting surface 2c and the chamfered portion 2d of the outer member 2 are simultaneously machined by cutting operations such as grinding or turning operations. When the fitting surface 2c and chamfered portion 2d of the outer member 2 are simultaneously ground together with the double row outer raceway surfaces 2a, 2a after heat treatment by a formed grinding wheel, it is possible to improve the dimensional accuracy in roundness and coaxiality of the fitting surface 2c and the chamfered portion 2d and thus to reduce working steps and accordingly manufacturing cost.

The protection covers thus manufactured are usually stacked each other during manufacturing steps as shown in Fig. 3(a) for space saving during stock or under wait for manufacturing operation. In this embodiment, an outer diameter D1 of a tip end of the cylindrical portion 17 of the protection cover 10 is set smaller than an outer diameter D2 of a tip end of the contact lip 19b of the elastic member 19 (D1 < D2) as shown in Fig. 3(b). This makes it possible to provide a wheel bearing apparatus which can prevent the contact lip 19b of a lower stacked protection cover 10 from being damaged or cut by the tip end of the cylindrical portion 17 of an upper stacked protection cover 10 when the protection covers are stacked each other and thus can improve the workability in manufacturing and transferring steps as well as reliability of quality. It may be possible as shown in Fig. 3(c) to reduce the diameter D1 of the tip end of the cylindrical portion 17 of the protection cover 10 to keep the tip end of the cylindrical portion 17 away from the tip end of the contact lip 19b of the elastic member 19' so that the tip end of the cylindrical portion 17 can contact the root of the elastic member 19'.

Fig. 4 shows a modification of the protection cover 10 of Fig. 2. The protection cover 20 of this modification is basically different from the protection cover 10 only in structure of the fitting portion and accordingly same reference numerals are used for designating the same structural elements of the previously described embodiment and detailed description of them will be omitted.

This protection cover 20 is press-formed of non-magnetic austenitic stainless steel sheet as having a cup-shaped configuration and comprises a cylindrical fitting portion 20a adapted to be press-fitted into the inner circumference of the inner-side end of the outer member (not shown), a disc-shaped shield portion 10b extending radially inward from the fitting portion 20a and a bottom portion 10d extending from the shield portion 10b via a bent portion 10c.

In this modification, the fitting portion 20a of the protection cover 20 comprises a cylindrical portion 21 to be metal-fitted into the fitting surface of the outer member and a radially reduced cylindrical portion 18 axially extending from the cylindrical portion 21. An elastic member 19' formed of synthetic resin such as NBR etc. is integrally adhered to the radially reduced portion 18.

As shown in the enlarged view of Fig. 4(b), a chamfered portion 21a is formed on a tip end of the cylindrical portion 21 of the protection cover 20 and is designed so that it abuts against the root of the contact lip 19b and an inclination angle of the chamfered portion 21a corresponds to and is substantially same as that of the contact lip 19b. This makes it possible to easily press-fit the protection cover into to the outer member and improve the stability of the stacked state and thus the workability in manufacture of the protection cover. In this case, the wording "substantially same" means that the inclination angle of the chamfered portion 21a is simply a target value and accordingly there is substantially no difference between inclination angles of the chamfered portion 21a and the contact lip 19b. That is, difference in angles caused by manufacturing error should be allowed.

Figs. 5∼7 show other modifications of the protection cover 10 of Fig. 2. These modifications are basically different from the previously described protection covers only in structure of the fitting portion and accordingly same reference numerals are used for designating the same structural elements of the previously described embodiment and detailed description of them will be omitted.

The protection cover 22 shown in Fig. 5(a) is press-formed of non-magnetic austenitic stainless steel sheet as having a cup-shaped configuration and comprises a cylindrical fitting portion 22a adapted to be press-fitted into the inner circumference of the inner-side end of the outer member (not shown), a disc-shaped shield portion 10b extending radially inward from the fitting portion 22a and a bottom portion 10d extending from the shield portion 10b via a bent portion 10c.

In this modification, the fitting portion 22a of the protection cover 22 comprises a cylindrical portion 23 to be metal-fitted into the fitting surface of the outer member and a radially reduced cylindrical portion 18 axially extending from the cylindrical portion 23. An elastic member 19' formed of synthetic resin such as NBR etc. is integrally adhered to the radially reduced portion 18.

As shown in the enlarged view of Fig. 5(b), a chamfered portion 23a having a circular arc surface is formed on a tip end of the cylindrical portion 23 of the protection cover 22 so that the chamfered portion 23a can abut against the root of the contact lip 19b. This makes it possible to easily press-fit the protection cover 22 into to the outer member and prevent the contact lip 19b from being damaged or cut.

The protection cover 24 shown in Fig. 6(a) is press-formed of non-magnetic austenitic stainless steel sheet as having a cup-shaped configuration and comprises a cylindrical fitting portion 24a adapted to be press-fitted into the inner circumference of the inner-side end of the outer member (not shown), a disc-shaped shield portion 10b extending radially inward from the fitting portion 24a and a bottom portion 10d extending from the shield portion 10b via a bent portion 10c.

In this modification, the fitting portion 24a of the protection cover 24 comprises a cylindrical portion 25 to be metal-fitted into the fitting surface of the outer member and a radially reduced cylindrical portion 18 axially extending from the cylindrical portion 25. An elastic member 19 formed of synthetic resin such as NBR etc. is integrally adhered to the radially reduced portion 18.

As shown in the enlarged view of Fig. 6(b), a bent edge 25a bent radially inward is formed on a tip end of the cylindrical portion 25 of the protection cover 24 so that the bent edge 25a can abut against the elastic member 19 avoiding the contact lip 19b. This makes it possible to easily press-fit the protection cover 24 into to the outer member and prevent the contact lip 19b from being damaged or cut.

The protection cover 26 shown in Fig. 7(a) is press-formed of non-magnetic austenitic stainless steel sheet as having a cup-shaped configuration and comprises a cylindrical fitting portion 26a adapted to be press-fitted into the inner circumference of the inner-side end of the outer member (not shown), a disc-shaped shield portion 10b extending radially inward from the fitting portion 26a and a bottom portion 10d extending from the shield portion 10b via a bent portion 10c.

In this modification, the fitting portion 26a of the protection cover 26 comprises a cylindrical portion 27 to be metal-fitted into the fitting surface of the outer member and a radially reduced cylindrical portion 18 axially extending from the cylindrical portion 27. An elastic member 19 formed of synthetic resin such as NBR etc. is integrally adhered to the radially reduced portion 18.

As shown in the enlarged view of Fig. 7(b), the bent edge 27a bent radially inward at a right angle is formed on the end of the cylindrical portion 27 so that the end face of the bent edge 27a can abut against the elastic member 19. This makes it possible to easily press-fit the protection cover 26 into to the outer member and prevent the contact lip 19b from being damaged or cut.

Fig. 8 shows further modification of the protection cover 10 of Fig. 2. This modification is basically different from the previously described protection covers only in structure of the elastic member 19 of the protection cover 10 accordingly same reference numerals are used for designating the same structural elements of the previously described embodiments and detailed description of them will be omitted.

This protection cover 28 shown in Fig. 8(a) is press-formed of non-magnetic austenitic stainless steel sheet as having a cup-shaped configuration and comprises a cylindrical fitting portion 10a adapted to be press-fitted into the inner circumference of the inner-side end of the outer member (not shown), a disc-shaped shield portion 10b extending radially inward from the fitting portion 10a and a bottom portion 10d extending from the shield portion 10b via a bent portion 10c.

In this modification, the fitting portion 10a of the protection cover 28 comprises a cylindrical portion 17 to be metal-fitted into the fitting surface of the outer member and a radially reduced cylindrical portion 18 axially extending from the cylindrical portion 17. An elastic member 29 formed of synthetic resin such as NBR etc. is integrally adhered to the radially reduced portion 18.

As shown in the enlarged view of Fig. 8(b), the elastic member 29 comprises an annular projection 19a radially outwardly projecting from the outer circumference of the cylindrical portion 17 and a contact lip 19b radially outwardly extending with an inclination at the inner-side of the annular projection 19a, and a cylindrical guide portion 29a is integrally formed on the elastic member 29 radially inward of the contact lip 19b so that its side surface becomes flush with a side surface of the shield portion 10b, and an outer diameter D3 of the guide portion 29a is set smaller than an inner diameter D4 of the cylindrical portion 17 of the protection cover 28 (D3 < D4) with remaining a guiding gap therebetween. This makes it possible to improve the stability of the stacked state of the protection covers 28 and the workability in their manufacture since the cylindrical portion 17 of the upper protection cover 28 is radially guided by the guide portion 29a of the lower protection cover 28.

Fig. 9 shows further modification of the protection cover 10 of Fig. 2. This modification is basically different from the previously described protection covers only in configuration of the metallic portion of the protection cover 10 accordingly same reference numerals are used for designating the same structural elements of the previously described embodiments and detailed description of them will be omitted.

This protection cover 30 shown in Fig. 9(a) is press-formed of non-magnetic austenitic stainless steel sheet as having a cup-shaped configuration and comprises a cylindrical fitting portion 10a adapted to be press-fitted into the inner circumference of the inner-side end of the outer member (not shown), a disc-shaped shield portion 10b extending radially inward from the fitting portion 10a, a bent portion 30a bent from the shield portion 10b at a right angle, and a bottom portion 10d extending from the bent portion 30a radially inward.

In this modification, the protection cover 30 is formed as having configurations and dimensions so that metallic portions of mutually adjacent protection covers 30 contact each other before the cylindrical portions 17 are abutted against the elastic members 19 when the protection covers 30 are stacked each other. More particularly, since the bent portion 30a is bent from the shield portion 10b at a right angle, it is designed so that the metallic portions of the upper and lower protection covers 30 are firstly abutted each other and a height H2 of the fitting portion 10a is smaller than a height H3 from shield portion 10b of the upper protection cover 30 to the side surface of the elastic member 19 of the lower protection cover 30 when the upper and lower protection covers 30 are stacked each other (H2 <H3).

As shown in the enlarged view of Fig. 9(b), a corner portion between the bent portion 30a and the shield portion 10b of the upper protection cover 30 abuts against a corner portion between the bottom portion 10d and the bent portion 30a of the lower protection cover 30 and accordingly it is possible to avoid the metallic fitting portion 10a from contacting the elastic member 19 and thus prevent the contact lip 19b from being damaged and cut.

Figs. 10 and 11 show modifications of the protection cover 30 of Fig. 9. This modification is basically different from the previously described protection covers only in configuration of the metallic portion of the protection cover 30 accordingly same reference numerals are used for designating the same structural elements of the previously described embodiments and detailed description of them will be omitted.

This protection cover 31 shown in Fig. 10(a) is press-formed of non-magnetic austenitic stainless steel sheet as having a cup-shaped configuration and comprises a cylindrical fitting portion 10a adapted to be press-fitted into the inner circumference of the inner-side end of the outer member (not shown), a disc-shaped shield portion 31a extending radially inward from the fitting portion 10a, a bent portion 30a bent from the shield portion 31a at a right angle, and a bottom portion 31b extending from the bent portion 30a radially inward.

Similarly to the previously described modification (Fig. 9), the protection cover 31 of this modification is formed as having configurations and dimensions so that metallic portions of mutually adjacent protection covers 31 contact each other before the metallic cylindrical portions 17 are abutted against the elastic members 19 when the protection covers 31 are stacked each other. More particularly, it is so designed that a height H2 of the fitting portion 10a is smaller than a height H3 from the shield portion 31a of the upper protection cover 31 to the side surface of the elastic member 19 of the lower protection cover 31 when the upper and lower protection covers 31 are stacked each other (H2 < H3).

As shown in the enlarged view of Fig. 10(b), a corner portion 32 between the bent portion 30a and the shield portion 31a as well as a corner portion 33 between the bent portion 30a and bottom portion 31b are formed as having a tapered configuration. This causes abutment of the corner portion 32 between the bent portion 30a and the shield portion 31a of the upper protection cover 31 and the corner portion 33 between the bent portion 30a and bottom portion 31b of the lower protection cover 31. Accordingly, this makes it possible to avoid the metallic cylindrical portion 17 from contacting the elastic member 19 and thus prevent the contact lip 19b from being damaged. Furthermore, it enables the corner portions 32 and 33 of the upper and lower protection covers 31 to be surface-contacted each other and thus to improve the stability when stacked and workability during manufacturing steps.

A protection cover 34 shown in Fig. 11(a) is press-formed of non-magnetic austenitic stainless steel sheet as having a cup-shaped configuration and comprises a cylindrical fitting portion 10a adapted to be press-fitted into the inner circumference of the inner-side end of the outer member (not shown), a disc-shaped shield portion 31a extending radially inward from the fitting portion 10a, a bent portion 30a bent from the shield portion 31a at a right angle, a radially reduced cylindrical portion 34b axially extending from the bent portion 30a via a tapered stepped portion 34a, and a bottom portion 10d extending from the radially reduced portion 34a radially inward.

Similarly to the previous embodiment of Fig. 10, the protection cover 34 is formed as having configurations and dimensions so that metallic portions of mutually adjacent protection covers 34 contact each other before the metallic cylindrical portions 17 are abutted against the elastic members 19 when the protection covers 34 are stacked each other. More particularly, it is so designed that an outer diameter D5 of the radially reduced portion 34b is smaller than an inner diameter D6 of the bent portion 30a with remaining a small radial gap therebetwen (D5 < D6) to enable the bent portion 30a of the upper protection cover 34 to be fitted over the radially reduced portion 34b of the lower protection cover 34 as well as that a height H2 of the fitting portion 10a is smaller than a height H3 from the shield portion 31a of the upper protection cover 34 to the side surface of the elastic member 19 of the lower protection cover 34 when the protection covers 34 are stacked (H2 < H3).

Accordingly, the corner portion 32 between the bent portion 30a and the shield portion 31a of the upper protection cover 34 contacts the stepped portion 34a of the lower protection cover 34. This makes it possible to avoid the metallic cylindrical portion 17 from contacting the elastic member 19 and thus prevent the contact lip 19b from being damaged. Furthermore, it enables the corner portion 32 and the stepped portion 34a of the upper and lower protection covers 34 to be surface-contacted each other and thus to improve the stability when stacked and workability during manufacturing steps.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability in Industry

The wheel bearing apparatus of the present invention can be applied to any wheel bearing apparatus for a driven wheel of inner ring rotation type having a protection cover on an outer member and using balls or tapered rollers as rolling elements.

### Description of Reference numerals

- 1: inner member
- 2: outer member
- 2a: outer raceway surface
- 2b: body mounting flange
- 2c: fitting surface of outer member
- 2d: chamfered surface of outer member
- 2e: end face of outer member
- 3: rolling element
- 4: hub wheel
- 4a, 5a: inner raceway surface
- 5: inner ring
- 6: wheel mounting flange
- 6a: hub bolt
- 6b: inner-side base of wheel mounting flange
- 7: caulked portion
- 8: cage
- 9: seal
- 10, 20, 22, 24, 26, 28, 30, 31, 34: protection cover
- 10a, 20a, 22a, 24a, 26a: fitting portion
- 10b, 31a: shield portion
- 10c, 30a: bent portion
- 10d, 31b: bottom portion
- 11: core metal
- 12: seal member
- 12a: side lip
- 12b: dust lip
- 12c: grease lip
- 13: pulser ring

- 14: annular support member
- 14b: upright portion
- 15: magnetic encoder
- 16: rotation speed sensor
- 17, 21,23, 25,27: cylindrical portion
- 18: radially reduced portion
- 19, 19', 29: elastic member
- 19a: annular projection
- 19b: contact lip
- 21a, 23a: chamfered portion
- 25a, 27a: bent edge
- 29a: guide portion
- 32, 33: corner portion
- 34a: stepped portion
- 34b: radially reduced portion
- 51: outer member
- 51a: fitting surface
- 52: inner ring
- 53, 53': protection cover
- 53a, 55a: fitting portion
- 53b: shield portion
- 53c: bent portion
- 53d: bottom portion
- 54: pulser ring
- 55: annular support member
- 56: magnetic encoder
- 56b: upright portion
- 57: rotation speed sensor
- 58: cylindrical portion
- 59: radially reduced portion
- 60: elastic member
- 60a: annular projection
- d1: inner diameter of fitting portion of protection cover
- d2: outer diameter of radially reduced portion of protection cover
- D1: outer diameter of cylindrical portion
- D2: outer diameter of contact lip
- D3: outer diameter of guide portion
- D4: inner diameter of cylindrical portion
- D5: outer diameter of radially reduced portion
- D6: inner diameter of bent portion
- H2: height of fitting portion
- H3: height from shield portion of upper protection cover to side surface of elastic member of lower protection cover when stacked
- t0: thickness of protection cover other than fitting portion
- t1: thickness of fitting portion of protection cover

## Claims

1. A cup-shaped steel protection cover (30, 31, 34) of a wheel bearing apparatus, the wheel bearing apparatus comprising:
an outer member (2) integrally formed on its inner circumference with double row outer raceway surfaces (2a, 2a);
an inner member (1) including a hub wheel (4) and at least one inner ring (5), the hub wheel (4) being integrally formed on its one end with a wheel mounting flange (6) and having a cylindrical portion (4b) axially extending from the wheel mounting flange (6), the inner ring (5) being press fitted onto the cylindrical portion (4b) of the hub wheel (4), the inner member (1) being formed on its outer circumferences with double row inner raceway surfaces (4a, 5a) opposing to the double row outer raceway surfaces (2a, 2a);
double row rolling elements (3, 3) contained between the outer raceway surfaces (2a, 2a) and inner raceway surfaces (4a, 5a) respectively of the outer member (2) and the inner member (1); and
the cup-shaped steel protection cover (30, 31, 34) mounted on the inner-side end of the outer member (2); the protection cover (30, 31, 34) comprising a cylindrical fitting portion (10a) adapted to be press-fitted into the inner circumference of the inner-side end of the outer member (2), a disc-shaped shield portion (10b, 31a) extending radially inward from the fitting portion (10a) and a bottom portion (10d, 31b) extending from the shield portion (10b, 31a) via a bent portion (30a) for covering the inner-side end of the inner member (1);
wherein the fitting portion (10a) of the protection cover (30, 31, 34) comprises a cylindrical portion (17) adapted to be metal-contact fitted into a cylindrical fitting surface (2c) formed on the inner circumference of the end of the outer member (2) and a radially reduced portion (18) axially extending from the cylindrical portion (17);
wherein an elastic member (19) of synthetic rubber is integrally adhered to the radially reduced portion (18) via vulcanizing adhesion, the elastic member (19) comprising an annular projection (19a) radially outwardly projecting from the outer circumference of the cylindrical portion (17); and
wherein when the protection cover (30, 31, 34) is fitted into the outer member (2), the annular projection (19a) is closely contacted with the fitting surface (2c) with being elastically deformed,
**characterized in that**
- the elastic member (19) comprises a contact lip (19b) radially outwardly extending with an inclination at the inner-side of the annular projection (19a);
- when the protection cover (30, 31, 34) is fitted into the outer member (2), the contact lip (19b) is elastically contacted with the inner-side end of the outer member (2);
- the bent portion (30a) is formed with being bent at a right angle relative to the shield portion (10b, 31a) and the protection cover (30, 31, 34) is formed as having configurations and dimensions so that metallic portions of mutually adjacent protection covers contact each other before the cylindrical portions (17) are abutted against the elastic members (19) when the protection covers (30, 31, 34) are stacked on each other, whereby a height (H2) of the fitting portion (10a) is smaller than a height (H3) from a shield portion (10b, 31a) of an upper protection cover (30, 31, 34) to the side surface of the elastic member (19) of a lower protection cover (30, 31, 34) when the upper and lower protection covers (30, 31) are stacked on each other (H2 < H3).

2. A cup-shaped steel protection cover (30, 31, 34) of a wheel bearing apparatus of claim 1 wherein a pulser ring (13) of its magnetic characteristics being alternately changed along its circumferential direction is fitted onto the inner ring (5), and wherein the protection cover (10) is formed of non-magnetic austenitic stainless steel sheet and a rotation speed sensor (16) is arranged oppositely to the pulser ring (13) with being separated through an axial air gap via the protection cover (10).

3. A cup-shaped steel protection cover (30, 31, 34) of a wheel bearing apparatus of claim 1 or 2 wherein an outer diameter (D1) of a tip end of the cylindrical portion (17) of the protection cover (10) is set smaller than an outer diameter (D2) of a tip end of the contact lip (19b) of the elastic member (19) (D1 < D2).

4. A cup-shaped steel protection cover (30, 31, 34) of a wheel bearing apparatus of claim 1 wherein a chamfered portion (21a) having an inclined flat surface is formed on a tip end of the cylindrical portion (21) of the protection cover (20) and an inclination angle of the chamfered portion (21a) corresponds to that of the contact lip (19b).

5. A cup-shaped steel protection cover (30, 31, 34) of a wheel bearing apparatus of claim 1 wherein a chamfered portion (23a) having a circular arc surface is formed on a tip end of the cylindrical portion (23) of the protection cover (22).

6. A cup-shaped steel protection cover (30, 31, 34) of a wheel bearing apparatus of claim 1 wherein a bent edge (25a or 27a) bent radially inward is formed on a tip end of the cylindrical portion (25 or 27) of the protection cover (24 or 26).

7. A cup-shaped steel protection cover (30, 31, 34) of a wheel bearing apparatus of claim 1 wherein a cylindrical guide portion (29a) is integrally formed on the elastic member (29) radially inward of the contact lip (19b) and an outer diameter (D3) of the guide portion (29a) is set smaller than an inner diameter (D4) of the cylindrical portion (17) of the protection cover (28) (D3 < D4) with remaining a guiding gap therebetween.

8. A cup-shaped steel protection cover (30, 31, 34) of wheel bearing apparatus of claim 1 wherein the protection cover (34) comprises a smaller cylindrical portion (34b) axially extending from the bent portion (30a) via a taper-shaped stepped portion (34a) and having a diameter smaller than that of the bent portion (30a).

## Patentansprüche

1. Becherförmige Stahlschutzabdeckung (30, 31, 34) einer Radlagervorrichtung, wobei die Radlagervorrichtung umfasst:
ein äußeres Element (2), das auf seinem Innenumfang in einem Stück mit zweireihigen äußeren Laufbahnflächen (2a, 2a) ausgebildet ist;
ein inneres Element (1), das eine Radnabe (4) und mindestens einen Innenring (5) umfasst, wobei die Radnabe (4) an ihrem einen Ende in einem Stück mit einem Radbefestigungsflansch (6) ausgebildet ist und einen zylindrischen Abschnitt (4b) aufweist, der sich axial vom Radbefestigungsflansch (6) erstreckt,
der Innenring (5) auf den zylindrischen Abschnitt (4b) der Radnabe (4) pressgepasst ist, das innere Element (1) auf seinen Außenumfängen mit zweireihigen inneren Laufbahnflächen (4a, 5a) gegenüber den zweireihigen äußeren Laufbahnflächen (2a, 2a) ausgebildet ist;
zweireihige Rollelemente (3, 3), die zwischen den äußeren Laufbahnflächen (2a, 2a) und den inneren Laufbahnflächen (4a, 5a) des äußeren Elements (2) bzw. des inneren Elements (1) enthalten sind; und
wobei die becherförmige Stahlschutzabdeckung (30, 31, 34) auf dem innenseitigen Ende des äußeren Elements (2) befestigt ist; die Schutzabdeckung (30, 31, 34) einen zylindrischen Passabschnitt (10a), der ausgelegt ist, um in den Innenumfang des innenseitigen Endes des äußeren Elements (2) pressgepasst zu werden, einen scheibenförmigen Abschirmungsabschnitt (10b, 31a), der sich vom Passabschnitt (10a) nach innen erstreckt, und einen unteren Abschnitt (10d, 31b) umfasst, der sich zum Abdecken des innenseitigen Endes der inneren Elements (1) vom Abschirmungsabschnitt (10b, 31a) über einen gebogenen Abschnitt (30a) erstreckt; wobei der Passabschnitt (10a) der Schutzabdeckung (30, 31, 34) einen zylindrischen Abschnitt (17), der ausgelegt ist, um in Metallkontakt in eine zylindrische Passfläche (2c) eingepasst zu werden, die auf dem Innenumfang des Endes der äußeren Elements (2) ausgebildet ist, und einen radial reduzierten Abschnitt (18) umfasst, der sich axial vom zylindrischen Abschnitt (17) erstreckt;
wobei ein elastisches Element (19) aus Kunstkautschuk durch Vulkanisationsklebung in einem Stück an den radial reduzierten Abschnitt (18) geklebt ist, das elastische Element (19) einen ringförmigen Vorsprung (19a) umfasst, der vom Außenumfang des zylindrischen Abschnitts (17) radial nach außen vorsteht; und
wobei, wenn die Schutzabdeckung (30, 31, 34) in das äußere Element (2) eingepasst wird, der ringförmige Vorsprung (19a) in engen Kontakt mit der Passfläche (2c) gebracht wird, wobei er elastisch verformt wird,
**dadurch gekennzeichnet, dass**
- das elastische Element (19) eine Kontaktlippe (19b) umfasst, die sich mit einer Neigung an einer Innenseite des ringförmigen Abschnitts (19a) radial nach außen erstreckt;
- die Kontaktlippe (19b) mit dem innenseitigen Ende des äußeren Elements (2) elastisch in Kontakt gebracht wird, wenn die Schutzabdeckung (30, 31, 34) in das äußere Element (2) eingepasst wird;
- der gebogene Abschnitt (30a) so ausgebildet ist, dass er in einem rechten Winkel in Bezug auf den Abschirmungsabschnitt (10b, 31a) gebogen ist, und die Schutzabdeckung (30, 31, 34) so ausgebildet ist, dass sie derartige Formen und Abmessungen aufweist, dass metallische Abschnitte von zueinander benachbarten Schutzabdeckungen einander berühren, bevor die zylindrischen Abschnitte (17) an die elastischen Elemente (19) angelegt werden, wenn die Schutzabdeckungen (30, 31, 34) aufeinander gestapelt werden, wodurch eine Höhe (H2) des Passabschnitts (10a) kleiner als eine Höhe (H3) von einem Abschirmungsabschnitt (10b, 31a) einer oberen Schutzabdeckung (30, 31, 34) zur Seitenfläche des elastischen Elements (19) einer unteren Schutzabdeckung (30, 31, 34) ist, wenn die obere und die untere Schutzabdeckung (30, 31) aufeinander gestapelt (H2 < H3) sind.

2. Becherförmige Stahlschutzabdeckung (30, 31, 34) einer Radlagervorrichtung nach Anspruch 1, wobei ein Impulsgeberring (13), dessen magnetische Eigenschaften sich entlang seiner Umfangsrichtung abwechselnd ändern, auf den inneren Ring (5) gepasst ist, und wobei die Schutzabdeckung (10) aus nichtmagnetischem austenitischem Edelstahlblech ausgebildet ist, und ein Drehzahlsensor (16) gegenüber dem Impulsgeberring (13) angeordnet ist, wobei er durch einen axialen Luftspalt über die Schutzabdeckung (10) getrennt ist.

3. Becherförmige Stahlschutzabdeckung (30, 31, 34) einer Radlagervorrichtung nach Anspruch 1 oder 2, wobei ein Außendurchmesser (D1) eines Spitzenendes des zylindrischen Abschnitts (17) der Schutzabdeckung (10) so festgelegt ist, dass er kleiner als ein Außendurchmesser (D2) eines Spitzenendes der Kontaktlippe (19b) des elastischen Endes (19) ist (D1 < D2).

4. Becherförmige Stahlschutzabdeckung (30, 31, 34) einer Radlagervorrichtung nach Anspruch 1, wobei ein abgeschrägter Abschnitt (21a) mit einer geneigten flachen Fläche an einem Spitzenende des zylindrischen Abschnitts (21) der Schutzabdeckung (20) ausgebildet ist, und ein Neigungswinkel des abgeschrägten Abschnitts (21a) dem der Kontaktlippe (19b) entspricht.

5. Becherförmige Stahlschutzabdeckung (30, 31, 34) einer Radlagervorrichtung nach Anspruch 1, wobei ein abgeschrägter Abschnitt (23a) mit einer kreisbogenförmigen Fläche an einem Spitzenende des zylindrischen Abschnitts (23) der Schutzabdeckung (22) ausgebildet ist.

6. Becherförmige Stahlschutzabdeckung (30, 31, 34) einer Radlagervorrichtung nach Anspruch 1, wobei eine gebogene Kante (25a oder 27a), die radial nach innen gebogen ist, an einem Spitzenende des zylindrischen Abschnitts (25 oder 27) der Schutzabdeckung (24 oder 26) ausgebildet ist.

7. Becherförmige Stahlschutzabdeckung (30, 31, 34) einer Radlagervorrichtung nach Anspruch 1, wobei ein zylindrischer Führungsabschnitt (29a) radial nach innen von der Kontaktlippe (19b) in einem Stück auf dem elastischen Element (29) ausgebildet ist, und ein Außendurchmesser (D3) des Führungsabschnitts (29a) so festgelegt ist, dass er kleiner als ein Innendurchmesser (D4) des zylindrischen Abschnitts (17) der Schutzabdeckung (28) ist (D3 < D4), wodurch ein Führungsspalt dazwischen bleibt.

8. Becherförmige Stahlschutzabdeckung (30, 31, 34) einer Radlagervorrichtung nach Anspruch 1, wobei die Schutzabdeckung (34) einen kleineren zylindrischen Abschnitt (34b) umfasst, der sich vom gebogenen Abschnitt (30a) axial über einen kegelförmigen abgestuften Abschnitt (34a) erstreckt und einen Durchmesser aufweist, der kleiner als der des gebogenen Abschnitts (30a) ist.

## Revendications

1. Couvercle de protection en acier en forme de coupe (30, 31, 34) d'un appareil de roulement pour roue, l'appareil de roulement pour roue comprenant :
un élément externe (2) formé de manière intégrée sur sa circonférence interne avec des doubles surfaces de circuit externe de rangée (2a, 2a) ;
un élément interne (1) comprenant une roue de moyeu (4) et au moins un anneau interne (5), la roue de moyeu (4) étant formée de manière intégrée sur son une extrémité avec une bride de fixation de roue (6) et ayant une section cylindrique (4b) s'étendant axialement à partir de la bride de fixation de roue (6), l'anneau interne (5) étant ajusté sous pression sur la section cylindrique (4b) de la roue de moyeu (4), l'élément interne (1) étant formé sur ses circonférences externes avec des doubles surfaces de circuit interne de rangée (4a, 5a) opposées aux doubles surfaces de circuit externe de rangée (2a, 2a) ;
des doubles éléments de roulement de rangée (3, 3) contenus entre les surfaces de circuit externe (2a, 2a) et les surfaces de circuit interne (4a, 5a) respectivement de l'élément externe (2) et de l'élément interne (1) ; et
le couvercle de protection en acier en forme de coupe (30, 31, 34) monté sur l'extrémité de côté interne de l'élément externe (2) ; le couvercle de protection (30, 31, 34) comprenant une section d'ajustement cylindrique (10a) adaptée pour être ajustée sous pression dans la circonférence interne de l'extrémité de côté interne de l'élément externe (2), une section de bouclier en forme de disque (10b, 31a) s'étendant radialement vers l'intérieur de la section d'ajustement (10a) et une section de partie inférieure (10d, 31b) s'étendant de la section de bouclier (10b, 31a) via une section courbée (30a) pour recouvrir l'extrémité de côté interne de l'élément interne (1) ; la section d'ajustement (10a) du couvercle de protection (30, 31, 34) comprenant une section cylindrique (17) adaptée pour être ajustée par contact métallique dans une surface d'ajustement cylindrique (2c) formée sur la circonférence interne de l'extrémité de l'élément externe (2) et
une section de réduction radiale (18) s'étendant axialement à partir de la section cylindrique (17) ;
un élément élastique (19) de caoutchouc synthétique étant collé de manière intégrée à la section de réduction radiale (18) via une adhésion par vulcanisation,
l'élément élastique (19) comprenant une projection annulaire (19a) se projetant vers l'extérieur radialement à partir de la circonférence externe de la section cylindrique (17) ; et
quand le couvercle de protection (30, 31, 34) est ajusté dans l'élément externe (2), la projection annulaire (19a) étant étroitement en contact avec la surface d'ajustement (2c) en étant déformée élastiquement,
**caractérisé en ce que**
- l'élément élastique (19) comprend une lèvre de contact (19b) s'étendant vers l'extérieur radialement avec une inclinaison au côté interne de la projection annulaire (19a) ;
- quand le couvercle de protection (30, 31, 34) est ajusté dans l'élément externe (2), la lèvre de contact (19b) est en contact élastique avec l'extrémité de côté interne de l'élément externe (2) ;
- la section courbée (30a) est formée comme étant courbée à un angle droit par rapport à la section de bouclier (10b, 31a) et le couvercle de protection (30, 31, 34) est formé comme ayant des configurations et des dimensions de sorte que des parties métalliques de couvercles de protection mutuellement adjacents entrent en contact l'un avec l'autre avant que les sections cylindriques (17) ne jouxtent les éléments élastiques (19) quand les couvercles de protection (30, 31, 34) sont empilés l'un sur l'autre, moyennant quoi une hauteur (H2) de la section d'ajustement (10a) est plus petite qu'une hauteur (H3) d'une section de bouclier (10b, 31a) d'un couvercle de protection supérieur (30, 31, 34) à la surface latérale de l'élément élastique (19) d'un couvercle de protection inférieur (30, 31) quand les couvercles de protection supérieur et inférieur sont empilés l'un sur l'autre (H2 < H3).

2. Couvercle de protection en acier en forme de coupe (30, 31, 34) d'un appareil de roulement pour roue selon la revendication 1 avec lequel un anneau impulseur (13) de ses caractéristiques magnétiques étant changé en alternance le long de sa direction circonférentielle est ajusté sur l'anneau interne (5), et le couvercle de protection (10) étant formé d'une feuille en acier inoxydable austénitique non magnétique et un capteur de vitesse de rotation (16) est disposé de manière opposée à l'anneau impulseur (13) tout en étant séparé par un espace libre d'air axial via le couvercle de protection (10).

3. Couvercle de protection en acier en forme de coupe (30, 31, 34) d'un appareil de roulement pour roue selon la revendication 1 ou 2 avec lequel un diamètre externe (D1) d'une extrémité de pointe de la section cylindrique (17) du couvercle de protection (10) est réglé plus petit qu'un diamètre externe (D2) d'une extrémité de pointe de la lèvre de contact (19b) de l'élément élastique (19) (D1 < D2).

4. Couvercle de protection en acier en forme de coupe (30, 31, 34) d'un appareil de roulement pour roue selon la revendication 1 avec lequel une section chanfreinée (21a) ayant une surface plate inclinée est formée sur une extrémité de pointe de la section cylindrique (21) du couvercle de protection (20) et un angle d'inclinaison de la section chanfreinée (21a) correspond à celui de la lèvre de contact (19b).

5. Couvercle de protection en acier en forme de coupe (30, 31, 34) d'un appareil de roulement pour roue selon la revendication 1 avec lequel une section chanfreinée (23a) ayant une surface d'arc circulaire est formée sur une extrémité de pointe de la section cylindrique (23) du couvercle de protection (22).

6. Couvercle de protection en acier en forme de coupe (30, 31, 34) d'un appareil de roulement pour roue selon la revendication 1 avec lequel un bord courbé (25a ou 27a) courbé radialement vers l'intérieur est formé sur une extrémité de pointe de la section cylindrique (25 ou 27) du couvercle de protection (24 ou 26).

7. Couvercle de protection en acier en forme de coupe (30, 31, 34) d'un appareil de roulement pour roue selon la revendication 1 avec lequel une section de guide cylindrique (29a) est formée de manière intégrée sur l'élément élastique (29) radialement vers l'intérieur de la lèvre de contact (19b) et un diamètre externe (D3) de la section de guide (29a) est réglé plus petit qu'un diamètre interne (D4) de la section cylindrique (17) du couvercle de protection (28) (D3 < D4), restant un espace libre de guidage entre eux.

8. Couvercle de protection en acier en forme de coupe (30, 31, 34) d'un appareil de roulement pour roue selon la revendication 1 avec lequel le couvercle de protection (34) comprend une section cylindrique plus petite (34b) s'étendant axialement à partir de la section courbée (30a) via une section échelonnée en forme de pointe (34a) et ayant un diamètre plus petit que celui de la section courbée (30a).
